# EUROPEAN PATENT SPECIFICATION

(11) **EP 3 173 384 B1**
(45) Date of publication and mention of the grant of the patent: **01.05.2019**
(21) Application number: 15825545.5
(22) Date of filing: 17.07.2015
(51) Int. Cl.: C03B 5/225, C03B 5/20, C03B 5/235, C03B 5/43

(54) **GLASS MELT PRODUCTION DEVICE AND GLASS MELT PRODUCTION METHOD**
GLASSCHMELZEHERSTELLUNGSVORRICHTUNG UND GLASSCHMELZEHERSTELLUNGSVERFAHREN
DISPOSITIF DE PRODUCTION DE VERRE FONDU ET PROCEDE DE PRODUCTION DE VERRE FONDU

(30) Priority: 24.07.2014 JP 2014150817
(43) Date of publication of application: 31.05.2017
(73) Proprietor: AGC Inc., Tokyo 100-8405 (JP)
(72) Inventor: HAMAMOTO, Hiroaki, Tokyo 100-8405 (JP); KOBAYASHI, Suguru, Tokyo 100-8405 (JP); NAGATA, Takahisa, Tokyo 100-8405 (JP); ABIKO, Satoshi, Tokyo 100-8405 (JP); SASAKI, Michito, Tokyo 100-8405 (JP); NINOMIYA, Kazuo, Tokyo 100-8405 (JP)
(74) Representative: Müller-Boré & Partner Patentanwälte PartG mbB
(86) International application number: PCT/JP2015/070588
(87) International publication number: WO 2016/013523

(56) References cited:
- WO-A1-2009/151034
- JP-A- H11 240 727
- JP-A- 2000 247 647
- JP-A- 2013 095 639
- JP-B2- 4 075 161
- US-A- 5 849 058
- US-A1- 2013 233 023
- US-B1- 6 318 126

## Description

The present invention relates to a glass melt production apparatus and a glass melt production method.

A glass plate to be used for buildings, for vehicles, for flat panel displays, etc., is produced by heating and melting a raw material prepared in a predetermined blend ratio in a melting vessel to obtain a glass melt, refining the glass melt and forming it into a glass plate having a predetermined thickness e.g. by a float process, and cutting the obtained glass plate into a predetermined shape.

Refining is an operation to remove bubbles remaining in the glass melt and is carried out to improve the quality of a glass plate to be produced. As a refining means, a vacuum degassing apparatus has been known, in which a glass melt is introduced to a vacuum degassing vessel, the interior of which is maintained in a predetermined degree of vacuum, whereby bubbles in the glass melt continuously flowing in the vacuum degassing vessel are made to grow and to float up in the glass melt employing their buoyancy, and are broken at the surface of the glass melt and removed. Patent Document 1 discloses an example of such a vacuum degassing apparatus. Fig. 4 is a side sectional view illustrating a vacuum degassing apparatus in Patent Document 1.

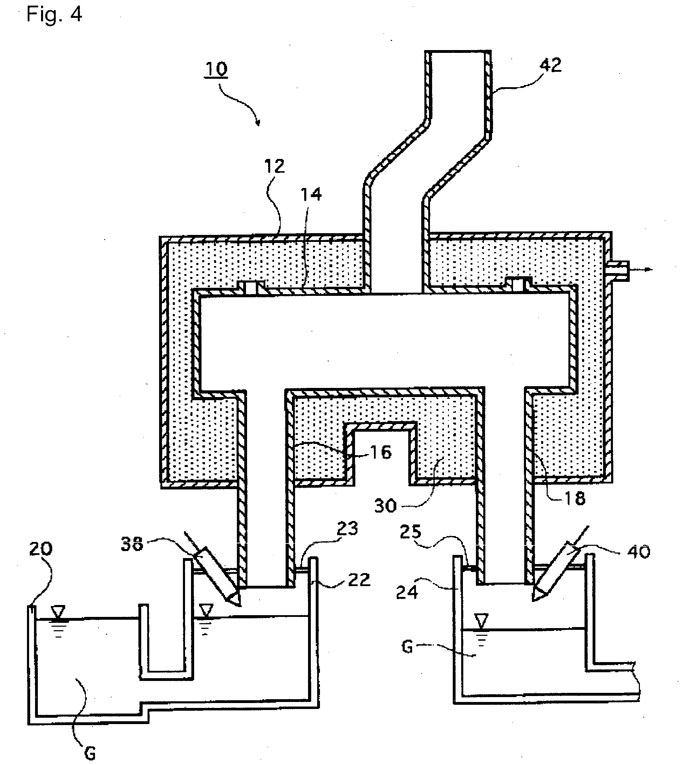

The vacuum degassing apparatus 10 shown in Fig. 4 is used to a process of vacuum degassing a glass melt G in a melting vessel 20 and continuously supplying the glass melt G to the successive treatment vessel. The vacuum degassing apparatus 10 has a vacuum degassing vessel 4 horizontally housed in a vacuum housing 12 which is evacuated of air to maintain the inside in a depressurized state, and has an uprising pipe 16 and a downfalling pipe 18, housed in both ends thereof so as to extend vertically downward. The uprising pipe 16 has a lower end immersed in the glass melt G in an upstream pit 22 which communicates with the melting vessel 20, and has an upper end communicating with the vacuum degassing vessel 14, and makes the glass melt G before degassing be drawn up from the upstream pit 22 into the vacuum degassing vessel 14. The downfalling pipe 18 similarly has a lower end immersed in the glass melt G in a downstream pit 24 which communicates with the successive treatment vessel (not shown), and has an upper end communicating with the vacuum degassing vessel 14, and makes the glass melt G after degassing be drawn down from the vacuum degassing vessel 14 and leads it out to the downstream pit 24. In the vacuum housing 12, heat-insulating material 30 such as bricks for thermal insulation is provided around the vacuum degassing vessel 14, the uprising pipe 16 and the downfalling pipe 18.

In the vacuum degassing apparatus 10 shown in Fig. 4, the flow path of the glass melt in the vacuum degassing vessel 14, the uprising pipe 16 and the downfalling pipe 18 is constituted by a refractory material (such as electro-cast bricks) less expensive than a noble metal such as platinum, and accordingly as compared with a vacuum degassing apparatus in which such constituents are made of a noble metal, it is possible to make such constituents large, for example, it is possible to increase their diameters, whereby a vacuum degassing apparatus with a large capacity can be constituted.

However, if such constituents are constituted by a refractory material, the following problems may arise. That is, it is necessary to prevent a temperature decrease of the glass melt G which is first drawn up from the upstream pit 22 and introduced to the vacuum degassing vessel 14, when operation of the vacuum degassing apparatus for the glass melt G is started, and at worst, it is necessary to prevent the glass melt G from being cooled and solidified. Accordingly, it is necessary to preheat the vacuum degassing vessel 14, the uprising pipe 16, the downfalling pipe 18, etc. before the glass melt G is introduced. If such constituents are made of a noble metal, preheating is possible by applying an electric current to such constituents to cause self-heating, that is, by current-applying heating. However, if such constituents are constituted by a refractory material, they cannot be preheated by current-applying heating, and it is necessary to provide a heat source for preheating.

The vacuum degassing apparatus 10 shown in Fig. 4 has a preheating apparatus comprising preheating burners 38 and 40 provided on the lower ends of the uprising pipe 16 and the downfalling pipe 18, and an exhaust pipe 42 disposed so as to communicate with the upper end of the vacuum degassing vessel 14.

In Patent Document 1, preheating of the vacuum degassing apparatus 10 is carried out as follows.

Before the vacuum degassing apparatus 10 is operated, the entire vacuum degassing apparatus 10 is lifted up so that the lower ends of the uprising pipe 16 and the downfalling pipe 18 are apart from the liquid level of the glass melt G in the upstream pit 22 and the downstream pit 24. Therefore, no glass melt G is present in the interior of the vacuum degassing vessel 14, the uprising pipe 16 and the downfalling pipe 18. In such a state, the preheating burners 38 and 40 are provided at the lower ends of the uprising pipe 16 and the downfalling pipe 18, and a combustion gas from the preheating burners 38 and 40 is introduced from the uprising pipe 16 and the downfalling pipe 18. By the combustion gas, the inner surface of the vacuum degassing vessel 14, the uprising pipe 16 and the downfalling pipe 18 is preheated. The combustion gas used for preheating is discharged from the exhaust pipe 42 constituted so as to communicate with the upper end of the vacuum degassing vessel 14. When preheating is conducted, covers 23 and 25 are provided on open portions on the upper side of the upstream pit 22 and the downstream pit 24.

### PRIOR ART DOCUMENTS/PATENT DOCUMENTS

Patent Document 1: JP-A-11-240727
US 2013/233023 A1 discloses a vacuum degassing apparatus and a vacuum degassing method for molten glass but does *inter alia* not disclose that a first closing means is provided on the first conducting pipe structure to shut off the flow of the glass melt between the melding vessel and the upstream pit.

Patent Document 1 discloses preheating before start of operation of the vacuum degassing apparatus 10. Further, the above preheating operation is necessary also when production of the glass melt is suspended for some reason and then production of the glass melt is started again. In such a case, the liquid level of the glass melt G in the upstream pit 22 and the downstream pit 24 is elevated as compared with that before start of operation of the vacuum degassing apparatus 10. Accordingly, the vacuum degassing apparatus 10 is lifted up until the lower ends of the uprising pipe 16 and the downfalling pipe 18 are completely apart from the liquid level of the glass melt G in the upstream pit 22 and in the downstream pit 24, and then the preheating burners 38, 40 are disposed at the lower ends of the uprising pipe 16 and the downfalling pipe 18. Such operation is troublesome in terms of the structure of the apparatus and in terms of the time required for the preheating operation. Further, after completion of preheating, an operation to remove the burners 38, 40 from the lower ends of the uprising pipe 16 and the downfalling pipe 18 is also necessary.

As described above, in a case where the vacuum degassing vessel 14, the uprising pipe 16 and the downfalling pipe 18 are constituted by a refractory material, it is desired to increase the size of such constituents for the purpose of constituting a vacuum degassing apparatus with a large capacity, and the above-mentioned problems in terms of the structure of the apparatus and problems in terms of the operation relating to the preheating are particularly remarkable.

Under these circumstances, the object of the present invention is to facilitate a preheating operation in a vacuum degassing apparatus having a flow path of a glass melt in an uprising pipe, a vacuum degassing vessel and a downfalling pipe constituted by a refractory material.

The present invention provides a glass melt production apparatus, which comprises a melting vessel; a vacuum degassing apparatus; a first conducting pipe structure connecting the melting vessel and the vacuum degassing apparatus; and a second conducting pipe structure to introduce a glass melt to a forming means, provided downstream the vacuum degassing apparatus;
the vacuum degassing apparatus having an uprising pipe through which the glass melt from the melting vessel ascends, a vacuum degassing vessel for the glass melt, and a downfalling pipe through which the glass melt from the vacuum degassing vessel descends,
at least part of a flow path of the glass melt in the uprising pipe, the vacuum degassing vessel and the downfalling pipe being constituted by a refractory material,
the first conducting pipe structure having an upstream pit to supply the glass melt to the uprising pipe, and
the second conducting pipe structure having a downstream pit containing the glass melt from the downfalling pipe,
wherein the glass melt production apparatus has a third conducting pipe structure connecting the upstream pit and the downstream pit;
a first closing means provided on the first conducing pipe structure, to shut off the flow of the glass melt between the melting vessel and the upstream pit;
a preheating burner of the vacuum degassing apparatus disposed at a position from which a combustion gas can be introduced to the third conducting pipe structure;
a combustion gas introduction means to introduce a combustion gas from the preheating burner to the third conducting pipe structure; and
an exhaust pipe to release the combustion gas, disposed so as to communicate with the upper end of the vacuum degassing vessel.

The glass melt production apparatus according to an embodiment of the present invention preferably further has a second closing means provided on the third conducting pipe structure, to shut off the flow of the glass melt in the third conducting pipe structure.

In the glass melt production apparatus according to an embodiment of the present invention, the first closing means preferably shuts off also the flow of a gas between the melting vessel and the upstream pit.

In the glass melt production apparatus according to an embodiment of the present invention, the second closing means preferably shuts off also the flow of a gas in the third conducting pipe structure.

In the glass melt production apparatus according to an embodiment of the present invention, it is preferred that the first closing means is a plate-shape product insertable/removal into/from the flow path of the glass melt in the first conducting pipe structure, and the planar shape of the plate-shape product is substantially the same as the cross sectional shape of the first conducting pipe structure at a portion where the plate-shape product is inserted.

In the glass melt production apparatus according to an embodiment of the present invention, it is preferred that the second closing means is a plate-shape product insertable/removal into/from the flow path of the glass melt in the second conducting pipe structure, and the planar shape of the plate-shape product is substantially the same as the cross sectional shape of the third conducting pipe structure at a portion where the plate-shape product is inserted.

The glass melt production apparatus according to an embodiment of the present invention may further have a third closing means provided on the second conducting pipe structure, to shut off the flow of the glass melt in the second conducting pipe structure.

Further, according to an embodiment of the present invention, a glass product production apparatus, which comprises the glass melt production apparatus of the present invention, a forming means to form the glass melt into a formed product, and an annealing means to anneal the formed product to obtain a glass product, is provided.

The present invention further provides a glass melt production method, which employs a glass melt production apparatus comprising a melting vessel; a vacuum degassing apparatus; a first conducting pipe structure connecting the melting vessel and the vacuum degassing apparatus; and a second conducting pipe structure to introduce a glass melt to a forming means, provided downstream the vacuum degassing apparatus;
the vacuum degassing apparatus having an uprising pipe through which the glass melt from the melting vessel ascends, a vacuum degassing vessel for the glass melt, and a downfalling pipe through which the glass melt from the vacuum degassing vessel descends,
at least part of a flow path of the glass melt in the uprising pipe, the vacuum degassing vessel and the downfalling pipe being constituted by a refractory material,
the first conducting pipe structure having an upstream pit to supply the glass melt to the uprising pipe, and
the second conducting pipe structure having a downstream pit containing the glass melt from the downfalling pipe,
wherein the glass melt production apparatus has a third conducting pipe structure connecting the upstream pit and the downstream pit;
a first closing means provided on the first conducing pipe structure, to shut off the flow of the glass melt between the melting vessel and the upstream pit;
a preheating burner of the vacuum degassing apparatus disposed at a position from which a combustion gas can be introduced to the third conducting pipe structure;
a combustion gas introduction means to introduce a combustion gas from the preheating burner to the third conducting pipe structure; and
an exhaust pipe to release the combustion gas, disposed so as to communicate with the upper end of the vacuum degassing vessel,
wherein a combustion gas from the preheating burner is introduced to the third conducting pipe structure in a state where the flow of the glass melt between the melting vessel and the upstream pit is shut off by the first closing means, to preheat the flow path of the glass melt in the uprising pipe, the vacuum degassing vessel and the downfalling pipe, and
wherein after completion of the preheating, the glass melt is allowed to flow by opening the first closing means, the pressure in the interior of the vacuum degassing vessel is reduced to let the glass melt ascend from the upstream pit through the uprising pipe and flow into the vacuum degassing vessel, the glass melt is degassed in the vacuum degassing vessel, and the degassed glass melt is let to descend through the downfalling pipe and flow out from the downstream pit to obtain a glass melt.

In the glass melt production method according to an embodiment of the present invention, it is preferred that the glass melt production apparatus further has a second closing means provided on the third conducting pipe structure, to shut off the flow of the glass melt in the third conducting pipe structure, a combustion gas from the preheating burner is introduced to the third conducting pipe structure in a state where the flow of the glass melt between the third conducting pipe structure and the upstream pit is shut off by the second closing means, to preheat the flow path of the glass melt in the uprising pipe, the vacuum degassing vessel and the downfalling pipe.

Further, according to an embodiment of the present invention, a glass product production method, which comprises a step of preheating the flow path by the glass melt production method of the present invention, a step of producing a glass melt after the preheating step, a step of forming the glass melt into a formed product, and a step of annealing the formed product to obtain a glass product, is provided.

According to the present invention, it is possible to facilitate a preheating operation in a vacuum degassing apparatus having a flow path of a glass melt in an uprising pipe, a vacuum degassing vessel and a downfalling pipe constituted by a refractory material.

### BRIEF DESCRIPTION OF DRAWINGS

Fig. 1 is a side sectional view illustrating an embodiment of a glass melt production apparatus of the present invention.
Fig. 2 is a partial enlarged view illustrating a portion of a first conducting pipe structure 200 shown in Fig. 1, where a first closing means 220 is provided.
Fig. 3 is a front sectional view illustrating a portion of a first conducting pipe structure 200 shown in Fig. 1, where a first closing means 220 is provided, as observed from the downstream side in a direction of flow of a glass melt G.
Fig. 4 is a side sectional view illustrating a vacuum degassing apparatus in Patent Document 1.
Fig. 5 is a flow chart illustrating an embodiment of a glass product production method of the present invention.

Now, the present invention will be described with reference to drawings illustrating an embodiment of the present invention.

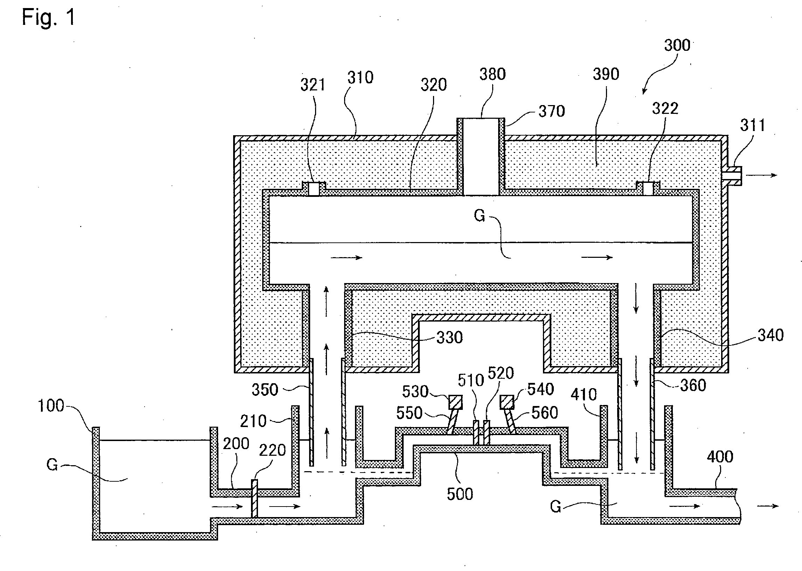

Fig. 1 is a side sectional view illustrating an embodiment of a glass melt production apparatus of the present invention.

The glass melt production apparatus shown in Fig. 1 comprises a melting vessel 100, a vacuum degassing apparatus 300, a first conducting pipe structure 200 and a second conducting pipe structure 400. In the melting vessel 100, a glass material is melted to obtain a glass melt G. In the vacuum degassing apparatus 300, the interior of which is maintained in a reduced pressure atmosphere, bubbles in the glass melt G supplied from the melting vessel 100 are made to float up, broken and removed. The first conducting pipe structure 200 connects the melting vessel 100 and the vacuum degassing apparatus 300, and the second conducting pipe structure 400 is provided downstream the vacuum degassing apparatus 300 and introduces the glass melt G to a forming means (not shown).

The glass melt G obtained in the melting vessel 100 shown in Fig. 1 is supplied via the first conducting pipe structure 200 to the vacuum degassing apparatus 300.

The vacuum degassing apparatus 300 shown in Fig. 1 has a vacuum housing 310 which is made of a metal such as stainless steel, the interior of which is maintained in a reduced pressure state at a time of operation. The vacuum housing 310 has a suction port 311 which reduces the pressure in the interior by vacuum suction, on the upper right in Fig. 1.

The vacuum housing 310 has a vacuum degassing vessel 320 accommodated therein so that its long axis is in a horizontal direction. On the upper part of the vacuum degassing vessel 320, suction ports 321 and 322 communicating with the vacuum housing 310 are provided so as to reduce and maintain the pressure in the vacuum degassing vessel 320 to a predetermined pressure by vacuum suction of the vacuum housing 310 e.g. by a vacuum pump not shown.

To a lower face of an end side of the vacuum degassing vessel 320, an uprising pipe 330 is attached so as to vertically extend, and to a lower face of the other end side, a downfalling pipe 340 is attached. The flow path of the glass melt G in the vacuum degassing vessel 320, the uprising pipe 330 and the downfalling pipe 340 is constituted by a refractory material.

The uprising pipe 330, the lower end of which is immersed in the glass melt G in the upstream pit 210 provided on the downstream end of the first conducting pipe structure 200, makes the glass melt G before degassing be drawn up from the upstream pit 210 into the vacuum degassing vessel 320. The downfalling pipe 340, the lower end of which is immersed in the glass melt G in the downstream pit 410 provided on the upstream end of the second conducting pipe structure 400, let the glass melt G after degassing descend from the vacuum degassing vessel 320 and be introduced to the downstream pit 410.

The vacuum degassing apparatus 300 shown has extension tubes 350 and 360 attached to the lower ends of the uprising pipe 330 and the downfalling pipe 340, respectively. The extension tubes 350 and 360 are hollow cylinders made of platinum or a platinum alloy, and such extension tubes 350 and 360 are respectively immersed in the glass melt G in the upstream pit 210 and the glass melt G in the downstream pit 410. However, in the vacuum degassing apparatus according to an embodiment of the present invention, the extension tubes attached to the lower ends of the uprising pipe and the downfalling pipe are optional constituents, and the uprising pipe and the downfalling pipe constituted by a refractory material may be respectively immersed in the glass melt in the upstream pit and the glass melt G in the downstream pit.

An exhaust pipe 370 to release the combustion gas at the time of preheating is disposed so as to communicate with the upper end at the center portion of the vacuum degassing vessel 320. The exhaust pipe 370 is air-tightly closed by a cover 380 when the vacuum degassing apparatus 300 is steadily operated, so that the exhaust pipe will not affect to maintain a predetermined reduced pressure in the vacuum housing 310.

The vacuum housing 310 has a heat-insulating material 390 disposed around each of the vacuum degassing vessel 320, the uprising pipe 330, the downfalling pipe 340 and the exhaust pipe 370.

The glass melt production apparatus shown in Fig. 1 has a third conducting pipe structure 500 connecting the upstream pit 210 and the downstream pit 410. To set up the vacuum degassing apparatus 300, in order to introduce the glass melt G to the vacuum degassing vessel 320 by vacuum, the glass melt G needs to be present not only in the upstream pit 210 but also in the downstream pit 410. Therefore, at the time of setting up the vacuum degassing apparatus 300, the third conducting pipe structure 500 is utilized as a by-pass for the glass melt G to supply the glass melt G from the upstream pit 210 to the downstream pit 410.

In the vacuum degassing apparatus according to an embodiment of the present invention, the flow path of the glass melt in the vacuum degassing vessel , the uprising pipe and the downfalling pipe is constituted by a refractory material, and accordingly the inner surface of the vacuum degassing vessel, the uprising pipe and the downfalling pipe constituting the flow path of the glass melt, is preheated by introducing the combustion gas from the preheating burner through the uprising pipe and the downfalling pipe.

In the vacuum degassing apparatus 300, the third conducting pipe structure 500 is employed as a path to introduce the combustion gas from the preheating burner to the uprising pipe 330 and the downfalling pipe 340.

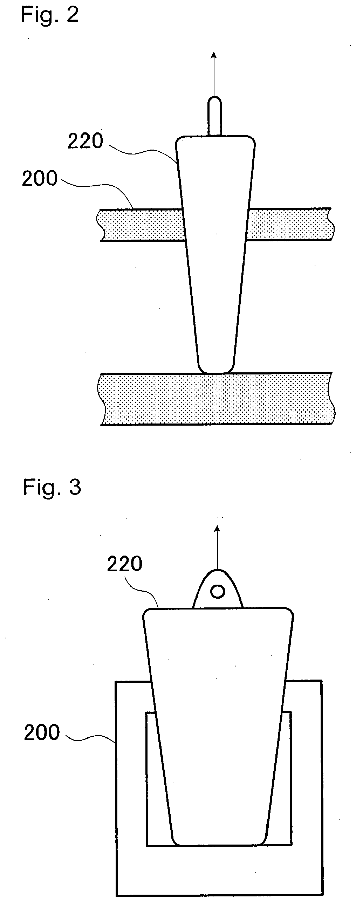

Accordingly, preheating burners 530, 540 are disposed at positions (in Fig. 1, above the third conducting pipe structure 500) from which the combustion gas can be introduced to the third conducting pipe structure 500. The combustion gas from the preheating burners 530, 540 is introduced to the third conducting pipe structure 500 by combustion gas introduction means 550, 560. The combustion gas introduced to the third conducting pipe structure 500 is introduced to the uprising pipe 330 and the downfalling pipe 360 via the upstream pit 210 and the downstream pit 410. Accordingly, at the time of preheating, it is preferred to provide covers shown by reference symbols 23 and 25 in Figs. 2, 4 and 5 in Patent Document 1, on open portions on the upper side of the upstream pit 210 and the downstream pit 410.

The vacuum degassing apparatus 300 shown in Fig. 1 has two preheating burners, however, the number of preheating burners is not limited thereto and may be one, or may be three or more. In such a case, combustion gas introduction means of a number corresponding to the number of the preheating burners may be provided to introduce the combustion gas from the preheating burners to the third conducting pipe structure 500.

The combustion gas introduction means 550, 560 are, for example, hollow pipings made of a refractory material, since a high temperature combustion gas passes therethrough.

The vacuum degassing apparatus 300 has a first closing means 220 on the first conducting pipe structure 200 so as to shut off the flow of the glass melt G between the melting vessel 100 and the upstream pit 210. The first closing means 220 is a means to open or close the flow path of the glass melt G in the first conducting pipe structure 200 by an optional operation. In Fig. 1, the flow path of the glass melt G in the first conducting pipe structure 200 is closed by the first closing means 220 to shut off the flow of the glass melt G between the melting vessel 100 and the upstream pit 210.

When the vacuum degassing apparatus 300 is steadily operated, or when the glass melt G is supplied from the upstream pit 210 via the third conducting pipe structure 500 to the downstream pit 410 to set up the vacuum degassing apparatus 300, the flow path of the glass melt G in the first conducting pipe structure 200 is opened to let the glass melt G flow from the melting vessel 100 to the upstream pit 210.

The first closing means is preferably provided on the first conducting pipe structure 200. The position where the first closing means is provided is not limited so long as it can shut off the flow of the glass melt G between the melting vessel 100 and the upstream pit 210, and may be a portion other than the portion shown in Fig. For example, the first closing means may be provided on the upstream side or on the downstream side of the position shown in Fig. 1 on the first conducting pipe structure 200. Further, the first closing means may be provided in the upstream pit 210 constituting a part of the first conducting pipe structure 200. In such a case, the first closing means the long axis of which is aligned in a horizontal direction is provided at a portion lower than a portion to which the third conducting pipe structure 500 is connected, on the upstream pit 210. The specific structure of the first closing means 220 will be described hereinafter.

As described above, at the time of preheating, the glass melt G is not present in the interior of the vacuum degassing vessel 320, the uprising pipe 330 and the downfalling pipe 340. Accordingly, it is necessary to lift up the vacuum degassing apparatus 300 until the lower ends of the uprising pipe 330 and the downfalling pipe 340 (in the case of the vacuum degassing apparatus 300 shown in Fig. 1, the lower ends of the extension tubes 350 and 360 attached to the lower ends of the uprising pipe 330 and the downfalling pipe 340) are completely apart from the glass melt G in the upstream pit 210 and the downstream pit 410.

In the vacuum degassing apparatus 300, at the time of preheating, the flow of the glass melt G in the first conducting pipe structure 200 is closed by the first closing means 220 to shut off the flow of the glass melt G from the melting vessel 100 into the upstream pit 210, whereby the liquid level of the glass melt G in the upstream pit 210 is lowered. In such a manner, at the time of preheating, the liquid level of the glass melt in the upstream pit 210 is as indicated by the dotted line in Fig. 1.

As described above, in the vacuum degassing apparatus 300 shown in Fig. 1, the combustion gas from the preheating burner 530 is introduced to the third conducting pipe structure 500 by the combustion gas introduction means 550, and the combustion gas is introduced to the uprising pipe 330 via the upstream pit 210. On that occasion, the combustion gas may flow upstream via the third conducting pipe structure 500 and further move from the upstream pit 210 toward the direction of the melting vessel 100 via the first conducting pipe structure 200. Then, an atmosphere cooler than the temperature of the melting vessel 100 on the downstream side is introduced to the melting vessel 100, whereby the temperature of the melting vessel 100 is lowered.

On the contrary, if the atmosphere in the melting vessel 100 flows downstream, for example, SO₂ and carbon flow from the melting vessel 100 into the vacuum degassing vessel 320, thus impairing the quality of glass products to be produced. Further, flow of the atmosphere in the melting vessel 100 into the vacuum degassing vessel 320 may damage the extension tubes 350 and 360 made of platinum or a platinum alloy.

Accordingly, in order to prevent the combustion gas from the preheating burner 530 from moving toward the direction of the melting vessel 100 and to prevent the atmosphere in the melting vessel 100 from flowing into the vacuum degassing vessel 320, the first closing means 220 preferably shut off also the flow of a gas between the melting vessel 100 and the upstream pit 210, although it is not essential.

In the vacuum degassing apparatus 300 shown in Fig. 1, second closing means 510, 520 are provided so as to shut off the flow of the glass melt G in the third conducting pipe structure 500. The second closing means 510, 520 are means to open or close the flow path of the glass melt G in the third conducting pipe structure 500 by an optional operation. In Fig. 1, by the second closing means 510, 520, the flow path of the glass melt G in the third conducting pipe structure 500 is closed to shut off the flow of the glass melt G in the third conducting pipe structure 500. When the glass melt G is supplied from the upstream pit 210 via the third conducting pipe structure 500 to the downstream pit 410 to set up the vacuum degassing apparatus 300, the flow path of the glass melt G in the third conducting pipe structure 500 is opened to let the glass melt G flow through the third conducting pipe structure 500.

However, in the vacuum degassing apparatus according to an embodiment of the present invention, the second closing means are optional constituents, and no second closing means may be provided on the third conducting pipe structure 500.

In the vacuum degassing apparatus 300 shown in Fig. 1, two second closing means (510, 520) are provided. One second closing means 510 is provided on the downstream side of the combustion gas introduction means 550, and the other second closing means 520 is provided on the upstream side of the combustion gas introduction means 560. By these means, the combustion gas from the preheating burners 530, 540 is introduced to the third conducting pipe structure 500 by the combustion gas introduction means 550, 560 while the flow of the glass melt between the third conducting pipe structure 500 and the upstream pit 210 is shut off. The combustion gas is introduced to the uprising pipe 330 and the downfalling pipe 340 via the upstream pit 210 and the downstream pit 410.

For example, in a case where one preheating burner is provided, it is preferred not to provide the second closing means. In such a case, the combustion gas from the preheating burner is introduced to the third conducting pipe structure 500 by the combustion gas introduction means, and the combustion gas is introduced to the uprising pipe 330 and the downfalling pipe 340 via the upstream pit 210 and the downstream pit 410.

The number of the second closing means provided on the third conducting pipe structure is not limited thereto. For example, in a case where the length of the third conducting pipe structure is short, one second closing means may be provided at a position around the middle of the third conducting pipe structure.

Further, the position where the second closing means is provided is not limited so long as the second closing means can shut off the flow of the glass melt G in the third conducting pipe structure 500, and may be a portion other than the portion shown in Fig. 1. For example, the second closing means may be provided on a further upstream side or downstream side of the third conducting pipe structure 500.

In the vacuum degassing apparatus 300 shown in Fig. 1, in a case where the combustion gas from the preheating burners 530, 540 is introduced to the third conducting pipe structure 500 by the combustion gas introduction means 550, 560 and is introduced to the uprising pipe 330 and the downfalling pipe 340 via the upstream pit 210 and the downstream pit 410, the second closing means 510, 520 preferably shut off also the flow of a gas in the third conducting pipe structure 500, although it is not essential.

Further, in the vacuum degassing apparatus 300 shown in Fig. 1, at the time of preheating, the flow path of the glass melt G in the third conducting pipe structure 500 is closed by the second closing means 510, 520 to shut off the flow of the glass melt G in the third conducting pipe structure 500, whereby supply of the glass melt G from the upstream pit 210 to the downstream pit 410 is shut off, and the liquid level of the glass melt G in the downstream pit 210 is lowered. In such a manner, at the time of preheating, the liquid level of the glass melt in the downstream pit 410 is as indicated by the dotted line in Fig. 1.

Further, by shutting off the flow of the glass melt G in the third conducting pipe structure 500, the liquid level of the glass melt in the third conducting pipe structure 500 is lowered, and a gaseous phase with a space sufficient for passage of a large quantity of air flow is formed in the upper portion of the third conducting pipe structure 500. Accordingly, the third conducting pipe structure 500 can be utilized as a path to introduce the combustion gas from the preheating burners 530, 540 to the uprising pipe 330 and the downfalling pipe 340. In order that at the time of preheating, a gaseous phase with a space sufficient for passage of a large quantity of air flow is to be formed in the upper portion of the third conducting pipe structure 500, it is necessary that the third conducting pipe structure 500 has a high ceiling. In such a case, it is necessary to make the extension tubes 350 and 360 made of platinum or a platinum alloy, attached to the lower ends of the uprising pipe 330 and the downfalling pipe 340, long, and such leads to an increase of the equipment costs, such being unfavorable.

As described above, the liquid level of the glass melt G in the upstream pit 210 and in the downstream pit 410 is lowered and as a result, an operation to lift up the vacuum degassing apparatus 300 at the time of preheating can be minimized, and depending upon the height of the liquid level of the glass melt G in the upstream pit 210 and the height of the liquid level of the glass melt G in the downstream pit 410 after the flow of the glass melt G from the melting vessel 100 is shut off, preheating may be carried out without operation to lift up the vacuum degassing apparatus 300.

As described above, the first closing means 220 is a means to open or close the flow path of the glass melt G in the first conducting pipe structure 200 by an optional operation. The second closing means 510, 520 are means to open or close the flow path of the glass melt G in the third conducting pipe structure 500 by an optional operation. The first closing means 220 and the second closing means 510, 520 preferably rapidly and securely close the flow path of the glass melt G without any complicated mechanism, since the object to be closed is the flow path of high temperature glass melt.

As mentioned above, the functions required for the first closing means 220 and the second closing means 510, 520 are the same in many aspects. Accordingly, a preferred embodiment of the first closing means will be described below, and a preferred embodiment of the second closing means is substituted by the description of the first closing means.

Figs. 2 and 3 are partial enlarged views illustrating a portion on the first conducting pipe structure 200 shown in Fig. 1, where the first closing means 220 is provided. Fig. 3 is a front sectional view illustrating a portion of the first conducting pipe structure 200 shown in Fig. 1, where the first closing means 220 is provided, as observed from the downstream side in a direction of flow of the glass melt G. Fig. 3 is a sectional view illustrating the portion shown in Fig. 2 as observed in a state where the direction of the first closing means is rotated 90° relative to the vertical axis.

As shown in Figs. 2 and 3, the first closing means 220 is a plate-shape product, and is inserted into the flow path of the glass melt G in the first conducting pipe structure 200 from above. On the upper part of the first conducting pipe structure 200, an opening into which the first closing means 200 is inserted is present. The plate-shape product constituting the first closing means 220 is made of a refractory material, since it is inserted into the flow path of the glass melt G in the first conducting pipe structure 200.

When the vacuum degassing apparatus 300 is steadily operated, or when the glass melt G is supplied from the upstream pit 210 via the third conducting pipe structure 500 to the downstream pit 410 to set up the vacuum degassing apparatus 300, the first closing means 220 is drawn upward (the direction indicated by the arrow), whereby the flow path of the glass melt G in the first conducting pipe structure 200 is opened, and the glass melt G flows from the melting vessel 100 to the upstream pit 210.

As mentioned above, the first closing means is preferably constituted by a plate-shape product insertable/removable into/from the flow path of the glass melt in the first conducting pipe structure. Further, the second closing means is also preferably constituted by a plate-shape product insertable/removable into/from the flow path of the glass melt in the second conducting pipe structure, in the same manner as the first closing means.

In the glass melt production apparatus according to an embodiment of the present invention, in order to close the flow path of the glass melt G in the first conducting pipe structure 200 by the first closing means 220, the planner shape of the plate-shape product constituting the first closing means 220 is preferably substantially the same as the cross sectional shape of the first conducting pipe structure 200 at a portion where the plate-shape product is inserted, as shown in Fig. 3.

However, in order to facilitate the operation to insert the first closing means 220 into the flow path of the glass melt G in the first conducting pipe structure 200 from above and the operation to withdraw it from the flow path of the glass melt G upward, the first closing means 220 has a substantial wedge shape with a lower portion in its planer shape and side shape narrower than the upper portion. Accordingly, as shown in Fig. 3, when the first flossing means 220 is inserted into the flow path of the glass melt G in the first conducting pipe structure 200, a gap is present between the first closing means 220 and the side wall surfaces of the first conducting pipe structure 200. However, this gap is sufficiently narrow, and the glass melt G is solidified while it basses through the gap. As a result, the flow of the glass melt G in the first conducting pipe structure 200 is shut off.

Here, the plate-shape product constituting the first closing means 220 may have a structure such that a cooling medium can flow in its interior. In such a case, by letting the cooling medium flow through the interior of the plate-shape product, solidification of the glass melt G which passes through the gap between the first closing means 220 and the side wall surfaces of the first conducting pipe structure 200 is accelerated. Further, a plate-shape product constituting the second closing means 510, 520 may also have a structure such that a cooling medium can flow in its interior. In such a case, the plate-shape product may not be constituted by a refractory material.

By the first closing means 220 shown in Figs. 2 and 3, the flow of a gas in the first conducting pipe structure 200 may be shut off, although it is not essential.

Now, the glass melt production method according to an embodiment of the present invention is described.

The glass melt production method according to an embodiment of the present invention employs the above-described glass melt production apparatus of the present invention.

In the glass melt production method according to an embodiment of the present invention, before production of the glass melt G is started, the inner surface of the uprising pipe 330, the vacuum degassing vessel 320 and the downfalling pipe 340, constituting the flow path of the glass melt G in the vacuum degassing apparatus 300, are preheated in accordance with the above-described procedure. Specifically, the following procedure is conducted. By the first closing means 220, the flow path of the glass melt G in the first conducting pipe structure 200 is closed to shut off the flow of the glass melt G into the upstream pit 210. On that occasion, it is preferred to close the flow path of the glass melt G in the third conducting pipe structure 500 by the second closing means 510, 520 to shut off also the flow of the glass melt G in the third conducting pipe structure 500.

In such a state, the combustion gas from the preheating burners 530, 540 is introduced to the third conducting pipe structure 500 by the combustion gas introduction means 550, 560. The combustion gas introduced to the third conducting pipe structure 500 is introduced to the uprising pipe 330 and the downfalling pipe 340 via the upstream pit 210 and the downstream pit 410. At the time of preheating, it is preferred to provide covers as shown by reference symbols 23 and 25 in Figs. 2, 4 and 5 in Patent Document 1 on open portions on the upper side of the upstream pit 210 and the downstream pit 410. The combustion gas which had preheated the inner surface of the uprising pipe 330, the vacuum degassing vessel 320 and the downfalling pipe 340 is released from the exhaust pipe 370 disposed on the upper end at a center portion of the vacuum degassing vessel 320.

After completion of preheating, the opening of the exhaust pipe 370 is air-tightly closed by the cover 380, and the first closing means 220 is operated to open the flow path of the glass melt G in the first conducting pipe structure 200 to let the glass melt G flow into the upstream pit 210. Then, the glass melt G is made to flow into the vacuum degassing vessel 320 and other portions while the pressure in the interior of the vacuum degassing vessel 320 is gradually reduced, and a predetermined degree of vacuum is kept. Production of the glass melt G is conducted in the same manner as conventional procedure. The glass melt G which had flowed into the upstream pit 210 is drawn up through the uprising pipe 330 into the vacuum degassing vessel 320. In the vacuum degassing vessel 320, the glass melt G is degassed. The glass melt G after degassing descends through the downfalling pipe 340 and is discharged into the downstream pit 410. In such a manner, high quality glass melt G with less bubbles can be obtained.

So long as the glass melt produced by the glass melt production method according to an embodiment of the present invention is a glass melt produced by a heat melting method, it is not limited in terms of the composition. Accordingly, it may be soda lime glass or alkali-free glass, or may be a mixed alkali glass such as alkali borosilicate glass.

The amount of production of the glass melt is preferably from 100 to 1000 ton/day, and considering a change of the type of the glass, incidental equipment, etc., it is more preferably from 300 to 900 ton/day, further preferably from 350 to 800 ton/day.

Now, the glass product production apparatus according to an embodiment of the present invention will be described.

The glass product production apparatus according to an embodiment of the present invention comprises the above-described glass melt production apparatus according to an embodiment of the present invention, a forming means to form a glass melt into a formed product, and an annealing means to anneal the formed product to obtain a glass product. The forming means and the annealing means are in accordance with known technique. For example, as a means for forming plate glass, an apparatus by a float process, a fusion process or a down draw process may be mentioned. Among them, a forming means employing a float bath for the float process is preferred in that high quality plate glass with various thicknesses from a thin plate glass to thick plate glass can be produced in a large amount. Further, as an annealing means, for example, an annealing furnace equipped with a transport roll as a mechanism to transport the glass after forming, and a mechanism to gradually decrease the temperature of the glass after forming is commonly employed. The mechanism to gradually decrease the temperature supplies the combustion gas or heat controlled by an electric heater to a necessary position in the furnace to gradually cool (that is, to anneal) the glass after forming, whereby the residual stress inherent in the glass after forming can be eliminated.

Now, the glass product production method according to an embodiment of the present invention will be described.

The glass product production method according to an embodiment of the present invention comprises a step of producing a glass melt by the glass melt production process according to an embodiment of the present invention (glass melt production step), a step of forming the glass melt into a formed product (forming step) and a step of annealing the glass after forming (annealing step). The glass melt production step further comprises a step of preheating the flow path of the glass melt in the uprising pipe, the vacuum degassing vessel and the downfalling pipe, and a step of producing the glass melt after the preheating step.

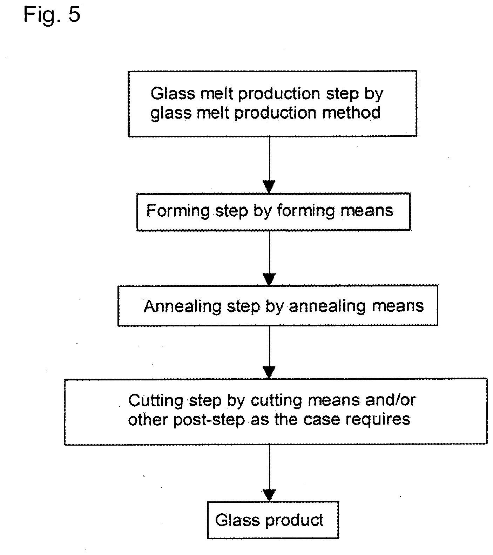

Fig. 5 is a flow chart illustrating an embodiment of a glass product production method of the present invention. Fig. 5 further illustrates a cutting step and other post-step conducted as the case requires, in addition to the glass melt production step, the forming step and the annealing step which are essential in the glass product production method according to an embodiment of the present invention. For example, in a case where a glass plate is to be produced as a glass product, the glass melt is formed into a glass ribbon in the forming step, which is cut into a desired size by the cutting step, and a post-step of polishing the glass edge is conducted as the case requires, to obtain a glass plate.

According to the present invention, in a glass melt production apparatus comprising a vacuum degassing apparatus having a flow path of a glass melt in an uprising pipe, a vacuum degassing vessel and a downfalling pipe constituted by a refractory material, a preheating operation before start of operation of the vacuum degassing apparatus, or a preheating operation at the time of setting up of the vacuum degassing apparatus when production of the glass melt is suspended by some reason and then production of the glass melt is started again, is facilitated, and the present invention is useful in production of a glass melt.

The entire disclosure of Japanese Patent Application No. 2014-150817 filed on July 24, 2014 including specification, claims, drawings and summary is cited herein.

### REFERENCE SYMBOLS

100: melting vessel, 200: first conducting pipe structure, 210: upstream pit, 220: first closing means, 300: vacuum degassing apparatus, 310: vacuum housing, 311: suction port, 320: vacuum degassing vessel, 321, 322: suction port, 330: uprising pipe, 340: downfalling pipe, 350: extension tube (uprising pipe side), 360: extension tube (downfalling pipe side), 370: exhaust pipe, 380: cover, 390: heat-insulating material, 400: second conducting pipe structure, 410:downstream pit, 500: third conducting pipe structure, 510, 520: second closing means, 530, 540: preheating burner, 550, 560: combustion gas introduction means.

## Claims

1. A glass melt production apparatus, which comprises a melting vessel (100); a vacuum degassing apparatus (300); a first conducting pipe structure (200) connecting the melting vessel (100) and the vacuum degassing apparatus (300); and a second conducting pipe structure (400) to introduce a glass melt to a forming means, provided downstream the vacuum degassing apparatus (300);
the vacuum degassing apparatus (300) having an uprising pipe (330) through which the glass melt from the melting vessel (100) ascends, a vacuum degassing vessel (320) for the glass melt, and a downfalling pipe (340) through which the glass melt from the vacuum degassing vessel (320) descends,
at least part of a flow path of the glass melt in the uprising pipe (330), the vacuum degassing vessel (320) and the downfalling pipe (340) being constituted by a refractory material,
the first conducting pipe structure (200) having an upstream pit (210) to supply the glass melt to the uprising pipe (330), and
the second conducting pipe structure (400) having a downstream pit (410) containing the glass melt from the downfalling pipe (340),
wherein the glass melt production apparatus has a third conducting pipe structure (500) connecting the upstream pit (210) and the downstream pit (410);
a first closing means (220) provided on the first conducing pipe structure (200), to shut off the flow of the glass melt between the melting vessel (100) and the upstream pit (210);
a preheating burner (530, 540) of the vacuum degassing apparatus (300) disposed at a position from which a combustion gas can be introduced to the third conducting pipe structure (500);
a combustion gas introduction means (550, 560) to introduce a combustion gas from the preheating burner (530, 540) to the third conducting pipe structure (500); and
an exhaust pipe (370) to release the combustion gas, disposed so as to communicate with the upper end of the vacuum degassing vessel (320).

2. The glass melt production apparatus according to Claim 1, which further has a second closing means (510, 520) provided on the third conducting pipe structure (500), to shut off the flow of the glass melt in the third conducting pipe structure (500).

3. The glass melt production apparatus according to Claim 1 or 2, wherein the first closing means (220) shuts off also the flow of a gas between the melting vessel (100) and the upstream pit (210).

4. The glass melt production apparatus according to Claim 2 or 3, wherein the second closing means (510, 520) shuts off also the flow of a gas in the third conducting pipe structure (500).

5. The glass melt production apparatus according to any one of Claims 1 to 4, wherein the first closing means (220) is a plate-shape product insertable/removal into/from the flow path of the glass melt in the first conducting pipe structure (200), and the planar shape of the plate-shape product is substantially the same as the cross sectional shape of the first conducting pipe structure (200) at a portion where the plate-shape product is inserted.

6. The glass melt production apparatus according to any one of Claims 2 to 5, wherein the second closing means (510, 520) is a plate-shape product insertable/removal into/from the flow path of the glass melt in the second conducting pipe structure (400), and the planar shape of the plate-shape product is substantially the same as the cross sectional shape of the third conducting pipe structure (500) at a portion where the plate-shape product is inserted.

7. The glass melt production apparatus according to any one of Claims 1 to 6, which further has a third closing means provided on the second conducting pipe structure (400), to shut off the flow of the glass melt in the second conducting pipe structure (400).

8. A glass product production apparatus, which comprises the glass melt production apparatus as defined in any one of Claims 1 to 7, a forming means to form the glass melt into a formed product, and an annealing means to anneal the formed product to obtain a glass product.

9. A glass melt production method, which employs a glass melt production apparatus comprising a melting vessel (100); a vacuum degassing apparatus (300); a first conducting pipe structure (200) connecting the melting vessel (100) and the vacuum degassing apparatus (300); and a second conducting pipe structure (400) to introduce a glass melt to a forming means, provided downstream the vacuum degassing apparatus (300);
the vacuum degassing apparatus (300) having an uprising pipe (330) through which the glass melt from the melting vessel (100) ascends, a vacuum degassing vessel (320) for the glass melt, and a downfalling pipe (340) through which the glass melt from the vacuum degassing vessel (320) descends,
at least part of a flow path of the glass melt in the uprising pipe (330), the vacuum degassing vessel (320) and the downfalling pipe (340) being constituted by a refractory material,
the first conducting pipe structure (200) having an upstream pit (210) to supply the glass melt to the uprising pipe (330), and
the second conducting pipe structure (400) having a downstream pit (410) containing the glass melt from the downfalling pipe (340),
wherein the glass melt production apparatus has a third conducting pipe structure (500) connecting the upstream pit (210) and the downstream pit (410);
a first closing means (220) provided on the first conducing pipe structure (200), to shut off the flow of the glass melt between the melting vessel (100) and the upstream pit (210);
a preheating burner (530, 540) of the vacuum degassing apparatus (300) disposed at a position from which a combustion gas can be introduced to the third conducting pipe structure (500);
a combustion gas introduction means (550, 560) to introduce a combustion gas from the preheating burner (530, 540) to the third conducting pipe structure (500); and
an exhaust pipe (370) to release the combustion gas, disposed so as to communicate with the upper end of the vacuum degassing vessel (320),
wherein a combustion gas from the preheating burner (530, 540) is introduced to the third conducting pipe structure (500) in a state where the flow of the glass melt between the melting vessel (100) and the upstream pit (210) is shut off by the first closing means (220), to preheat the flow path of the glass melt in the uprising pipe (330), the vacuum degassing vessel (320) and the downfalling pipe (340), and
wherein after completion of the preheating, the glass melt is allowed to flow by opening the first closing means (220), the pressure in the interior of the vacuum degassing vessel (320) is reduced to let the glass melt ascend from the upstream pit (210) through the uprising pipe (330) and flow into the vacuum degassing vessel (320), the glass melt is degassed in the vacuum degassing vessel (320), and the degassed glass melt is let to descend through the downfalling pipe (340) and flow out from the downstream pit (410) to obtain a glass melt.

10. The glass melt production method according to Claim 9, wherein the glass melt production apparatus further has a second closing means (510, 520) provided on the third conducting pipe structure (500), to shut off the flow of the glass melt in the third conducting pipe structure (500), and
wherein a combustion gas from the preheating burner (530, 540) is introduced to the third conducting pipe structure (500) in a state where the flow of the glass melt between the third conducting pipe structure (500) and the upstream pit (210) is shut off by the second closing means (510, 520), to preheat the flow path of the glass melt in the uprising pipe (330), the vacuum degassing vessel (320) and the downfalling pipe (340).

11. A glass product production method, which comprises a step of preheating the flow path by the glass melt production method as defined in Claim 9 or 10, a step of producing a glass melt after the preheating step, a step of forming the glass melt into a formed product, and a step of annealing the formed product to obtain a glass product.

## Patentansprüche

1. Vorrichtung zur Herstellung einer Glasschmelze, welche ein Schmelzgefäß (100); eine Vakuumentgasungsvorrichtung (300); eine erste leitende Rohrstruktur (200), welche das Schmelzgefäß (100) und die Vakuumentgasungsvorrichtung (300) verbindet; und eine zweite leitende Rohrstruktur (400) zum Einleiten einer Glasschmelze in ein Formgebungsmittel, welches abströmseitig von der Vakuumentgasungsvorrichtung (300) angeordnet ist, umfasst;
wobei die Vakuumentgasungsvorrichtung (300) ein Aufstiegsrohr (330), durch welches die Glasschmelze aus dem Schmelzgefäß (100) aufsteigt, ein Vakuumentgasungsgefäß (320) für die Glasschmelze und ein Fallrohr (340), durch welches die Glasschmelze aus dem Vakuumentgasungsgefäß (320) absteigt, aufweist,
mindestens ein Teil einer Strömungsbahn der Glasschmelze in dem Aufstiegsrohr (330), dem Vakuumentgasungsgefäß (320) und dem Fallrohr (340) aus einem feuerfesten Material gebildet ist,
die erste leitende Rohrstruktur (200) eine anströmseitige Grube (210) zum Versorgen des Aufstiegsrohrs (330) mit der Glasschmelze aufweist und
die zweite leitende Rohrstruktur (400) eine abströmseitige Grube (410), enthaltend die Glasschmelze aus dem Fallrohr (340), aufweist,
wobei die Vorrichtung zur Herstellung einer Glasschmelze eine dritte leitende Rohrstruktur (500), welche die anströmseitige Grube (210) und die abströmseitige Grube (410) verbindet;
ein erstes Mittel zum Verschließen (220), angeordnet an der ersten leitenden Rohrstruktur (200), zum Abschneiden des Stromes der Glasschmelze zwischen dem Schmelzgefäß (100) und der anströmseitigen Grube (210);
einen Vorerwärmungsbrenner (530, 540) der Vakuumentgasungsvorrichtung (300), angeordnet an einer Position, von der aus ein Verbrennungsgas in die dritte leitende Rohrstruktur (500) eingeleitet werden kann;
ein Mittel zum Einleiten von Verbrennungsgas (550, 560) zum Einleiten eines Verbrennungsgases aus dem Vorerwärmungsbrenner (530, 540) in die dritte leitende Rohrstruktur (500); und
ein Abgasrohr (370) zum Freisetzen des Verbrennungsgases, derart angeordnet, dass es mit dem oberen Ende des Vakuumentgasungsgefäßes (320) kommuniziert,
aufweist.

2. Vorrichtung zur Herstellung einer Glasschmelze nach Anspruch 1, welche weiter ein zweites Mittel zum Schließen (510, 520), angeordnet an der dritten leitenden Rohrstruktur (500) zum Abschneiden des Stromes der Glasschmelze in der dritten leitenden Rohrstruktur (500), aufweist.

3. Vorrichtung zur Herstellung einer Glasschmelze nach Anspruch 1 oder 2, wobei das erste Mittel zum Schließen (220) auch den Strom eines Gases zwischen dem Schmelzgefäß (100) und der anströmseitigen Grube (210) abschneidet.

4. Vorrichtung zur Herstellung einer Glasschmelze nach Anspruch 2 oder 3, wobei das zweite Mittel zum Schließen (510, 520) auch den Strom eines Gases in der dritten leitenden Rohrstruktur (500) abschneidet.

5. Vorrichtung zur Herstellung einer Glasschmelze nach einem der Ansprüche 1 bis 4, wobei das erste Mittel zum Schließen (220) ein plattenförmiges Produkt, einführbar/entfernbar in/aus die/der Strömungsbahn der Glasschmelze in der ersten leitenden Rohrstruktur (200), ist und die planare Form des plattenförmigen Produktes im Wesentlichen die gleiche ist, wie die Querschnittsform der ersten leitenden Rohrstruktur (200) in einem Bereich, wo das plattenförmige Produkt eingeführt wird.

6. Vorrichtung zur Herstellung einer Glasschmelze nach einem der Ansprüche 2 bis 5, wobei das zweite Mittel zum Schließen (510, 520) ein plattenförmiges Produkt, einführbar/entfernbar in/aus die/der Strömungsbahn der Glasschmelze in der zweiten leitenden Rohrstruktur (400), ist und die planare Form des plattenförmigen Produktes im Wesentlichen die gleiche ist, wie die Querschnittsform der dritten leitenden Rohrstruktur (500) in einem Bereich, wo das plattenförmige Produkt eingeführt wird.

7. Vorrichtung zur Herstellung einer Glasschmelze nach einem der Ansprüche 1 bis 6, welche weiter ein drittes Mittel zum Schließen, angeordnet an der zweiten leitenden Rohrstruktur (400), zum Abschneiden des Stromes der Glasschmelze in der zweiten leitenden Rohrstruktur (400) aufweist.

8. Vorrichtung zur Herstellung eines Glasproduktes, umfassend die Vorrichtung zur Herstellung einer Glasschmelze nach einem der Ansprüche 1 bis 7, ein Formgebungsmittel zum Formen der Glasschmelze in ein geformtes Produkt und ein Glühmittel zum Glühen des geformten Produktes, um ein Glasprodukt zu erhalten.

9. Verfahren zur Herstellung einer Glasschmelze, verwendend eine Vorrichtung zur Herstellung einer Glasschmelze, umfassend
ein Schmelzgefäß (100); eine Vakuumentgasungsvorrichtung (300); eine erste leitende Rohrstruktur (200), welche das Schmelzgefäß (100) und die Vakuumentgasungsvorrichtung (300) verbindet; und eine zweite leitende Rohrstruktur (400) zum Einleiten einer Glasschmelze in ein Formgebungsmittel, welches abströmseitig von der Vakuumentgasungsvorrichtung (300) angeordnet ist;
wobei die Vakuumentgasungsvorrichtung (300) ein Aufstiegsrohr (330), durch welches die Glasschmelze aus dem Schmelzgefäß (100) aufsteigt, ein Vakuumentgasungsgefäß (320) für die Glasschmelze und ein Fallrohr (340), durch welches die Glasschmelze aus dem Vakuumentgasungsgefäß (320) absteigt, aufweist,
mindestens ein Teil einer Strömungsbahn der Glasschmelze in dem Aufstiegsrohr (330), dem Vakuumentgasungsgefäß (320) und dem Fallrohr (340) aus einem feuerfesten Material gebildet ist,
die erste leitende Rohrstruktur (200) eine anströmseitige Grube (210) zum Versorgen des Aufstiegsrohrs (330) mit der Glasschmelze aufweist und
die zweite leitende Rohrstruktur (400) eine abströmseitige Grube (410), enthaltend die Glasschmelze aus dem Fallrohr (340), aufweist,
wobei die Vorrichtung zur Herstellung einer Glasschmelze eine dritte leitende Rohrstruktur (500), welche die anströmseitige Grube (210) und die abströmseitige Grube (410) verbindet;
ein erstes Mittel zum Verschließen (220), angeordnet an der ersten leitenden Rohrstruktur (200), zum Abschneiden des Stromes der Glasschmelze zwischen dem Schmelzgefäß (100) und der anströmseitigen Grube (210);
einen Vorerwärmungsbrenner (530, 540) der Vakuumentgasungsvorrichtung (300), angeordnet an einer Position, von der aus ein Verbrennungsgas in die dritte leitende Rohrstruktur (500) eingeleitet werden kann;
ein Mittel zum Einleiten von Verbrennungsgas (550, 560) zum Einleiten eines Verbrennungsgases aus dem Vorerwärmungsbrenner (530, 540) in die dritte leitende Rohrstruktur (500); und
ein Abgasrohr (370) zum Freisetzen des Verbrennungsgases, derart angeordnet, dass es mit dem oberen Ende des Vakuumentgasungsgefäßes (320) kommuniziert,
aufweist,
worin ein Verbrennungsgas aus dem Vorerwärmungsbrenner (530, 540) in die dritte leitende Rohrstruktur (500) in einem Zustand eingeleitet wird, in dem der Strom der Glasschmelze zwischen dem Schmelzgefäß (100) und der anströmseitigen Grube (210) durch das erste Mittel zum Schließen (220) abgeschnitten ist, um die Strömungsbahn der Glasschmelze in dem Aufstiegsrohr (330), dem Vakuumentgasungsgefäß (320) und dem Fallrohr (340) vorzuerwärmen, und worin es der Glasschmelze nach Abschluss des Vorerwärmens durch Öffnen des ersten Mittels zum Schließen (220) gestattet wird zu fließen, der Druck im Inneren des Vakuumentgasungsgefäßes (320) reduziert wird, um die Glasschmelze aus der anströmseitigen Grube (210) durch das Aufstiegsrohr (330) aufsteigen und in das Vakuumentgasungsgefäß (320) fließen zu lassen, die Glasschmelze in dem Vakuumentgasungsgefäß (320) entgast wird und die entgaste Gasschmelze durch das Fallrohr (340) absteigen und aus der abströmseitigen Grube (410) ausfließen gelassen wird, um eine Glasschmelze zu erhalten.

10. Verfahren zur Herstellung einer Glasschmelze nach Anspruch 9, wobei die Vorrichtung zur Herstellung einer Glasschmelze weiter ein zweites Mittel zum Schließen (510, 520), angeordnet an der dritten leitenden Rohrstruktur (500), zum Abschneiden des Stromes der Glasschmelze in der dritten leitenden Rohrstruktur (500) aufweist, und
worin ein Verbrennungsgas aus dem Vorerwärmungsbrenner (530, 540) in die dritte leitende Rohrstruktur (500) in einem Zustand eingeleitet wird, in dem der Strom der Glasschmelze zwischen der dritten leitenden Rohrstruktur (500) und der anströmseitigen Grube (210) durch das zweite Mittel zum Schließen (510, 520) abgeschnitten ist, um die Strömungsbahn der Glasschmelze in dem Aufstiegsrohr (330), dem Vakuumentgasungsgefäß (320) und dem Fallrohr (340) vorzuerwärmen.

11. Verfahren zur Herstellung eines Glasproduktes, umfassend einen Schritt des Vorerwärmens der Strömungsbahn durch das Verfahren zur Herstellung einer Glasschmelze nach Anspruch 9 oder 10, einen Schritt des Herstellens einer Glasschmelze nach dem Vorerwärmungsschritt, einen Schritt des Formens der Glasschmelze in ein geformtes Produkt und einen Schritt des Glühens des geformten Produktes, um ein Glasprodukt zu erhalten.

## Revendications

1. Appareil de production de verre fondu, qui comprend une cuve de fusion (100) ; un appareil de dégazage sous vide (300) ; une première structure de conduite (200) reliant la cuve de fusion (100) et l'appareil de dégazage sous vide (300) ; et une deuxième structure de conduite (400) pour introduire du verre fondu dans des moyens de formage prévus en aval de l'appareil de dégazage sous vide (300) ;
l'appareil de dégazage sous vide (300) comportant un tuyau montant (330) par lequel le verre fondu provenant de la cuve de fusion (100) monte, une cuve de dégazage sous vide (320) pour le verre en fusion, et un tuyau descendant (340) par lequel le verre fondu provenant de la cuve de dégazage sous vide (320) descend,
une partie au moins d'une trajectoire d'écoulement du verre fondu dans le tuyau montant (330), la cuve de dégazage sous vide (320) et le tuyau descendant (340) étant constituée par un matériau réfractaire,
la première structure de conduite (200) comportant une cuvette amont (210) pour délivrer le verre fondu dans le tuyau montant (330), et
la deuxième structure de conduite (400) comportant une cuvette aval (410) contenant le verre fondu provenant du tuyau descendant (340),
dans lequel l'appareil de production de verre fondu comporte une troisième structure de conduite (500) reliant la cuvette amont (210) et la cuvette aval (410) ;
des premiers moyens de fermeture (220) disposés sur la première structure de conduite (200), pour arrêter l'écoulement de verre fondu entre la cuve de fusion (100) et la cuvette amont (210) ;
un brûleur de préchauffage (530, 540) de l'appareil de dégazage sous vide (300), qui est disposé à un endroit d'où un gaz de combustion peut être introduit dans la troisième structure de conduite (500) ;
des moyens d'introduction de gaz de combustion (550, 560) pour introduire un gaz de combustion, à partir du brûleur de préchauffage (530, 540), dans la troisième structure de conduite (500) ; et
un tuyau d'échappement (370), pour le dégagement du gaz de combustion, qui est disposé de manière à communiquer avec l'extrémité supérieure de la cuve de dégazage sous vide (320).

2. Appareil de production de verre fondu selon la revendication 1, qui a également des deuxièmes moyens de fermeture (510, 520) disposés sur la troisième structure de conduite (500), pour arrêter l'écoulement de verre fondu dans ladite troisième structure de conduite (500).

3. Appareil de production de verre fondu selon la revendication 1 ou 2, dans lequel les premiers moyens de fermeture (220) arrêtent également l'écoulement d'un gaz entre la cuve de fusion (100) et la cuvette amont (210).

4. Appareil de production de verre fondu selon la revendication 2 ou 3, dans lequel les deuxièmes moyens de fermeture (510, 520) arrêtent également l'écoulement d'un gaz dans la troisième structure de conduite (500).

5. Appareil de production de verre fondu selon l'une quelconque des revendications 1 à 4, dans lequel les premiers moyens de fermeture (220) sont un produit en forme de plaque insérable/retirable dans/de la trajectoire d'écoulement du verre fondu, dans la première structure de conduite (200), et la forme plane du produit en forme de plaque est globalement la même que la forme de section transversale de la première structure de conduite (200) en une partie où le produit en forme de plaque est inséré.

6. Appareil de production de verre fondu selon l'une quelconque des revendications 2 à 5, dans lequel les deuxièmes moyens de fermeture (510, 520) sont un produit en forme de plaque insérable/retirable dans/de la trajectoire d'écoulement du verre fondu, dans la deuxième structure de conduite (400), et la forme plane du produit en forme de plaque est globalement la même que la forme de section transversale de la troisième structure de conduite (500) en une partie où le produit en forme de plaque est inséré.

7. Appareil de production de verre fondu selon l'une quelconque des revendications 1 à 6, qui a également des troisièmes moyens de fermeture disposés sur la deuxième structure de conduite (400), pour arrêter l'écoulement de verre fondu dans ladite deuxième structure de conduite (400).

8. Appareil de production de produits en verre, qui comprend l'appareil de production de verre fondu tel que défini dans l'une quelconque des revendications 1 à 7, des moyens de formage pour former le verre fondu en un produit formé, et des moyens de recuit pour recuire le produit formé, afin d'obtenir un produit en verre.

9. Procédé de production de verre fondu, qui utilise un appareil de production de verre fondu comprenant une cuve de fusion (100) ; un appareil de dégazage sous vide (300) ; une première structure de conduite (200) qui relie la cuve de fusion (100) et l'appareil de dégazage sous vide (300) ; et une deuxième structure de conduite (400) pour introduire du verre fondu dans des moyens de formage prévus en aval de l'appareil de dégazage sous vide (300) ;
l'appareil de dégazage sous vide (300) comportant un tuyau montant (330) par lequel le verre fondu provenant de la cuve de fusion (100) monte, une cuve de dégazage sous vide (320) pour le verre en fusion, et un tuyau descendant (340) par lequel le verre fondu provenant de la cuve de dégazage sous vide (320) descend,
une partie au moins d'une trajectoire d'écoulement du verre fondu dans le tuyau montant (330), la cuve de dégazage sous vide (320) et le tuyau descendant (340) étant constituée par un matériau réfractaire,
la première structure de conduite (200) comportant une cuvette amont (210) pour délivrer le verre fondu dans le tuyau montant (330), et
la deuxième structure de conduite (400) comportant une cuvette aval (410) qui contient le verre fondu provenant du tuyau descendant (340),
dans lequel l'appareil de production de verre fondu comporte une troisième structure de conduite (500) qui relie la cuvette amont (210) et la cuvette aval (410) ;
des premiers moyens de fermeture (220) disposés sur la première structure de conduite (200), pour arrêter l'écoulement de verre fondu entre la cuve de fusion (100) et la cuvette amont (210) ;
un brûleur de préchauffage (530, 540) de l'appareil de dégazage sous vide (300), qui est disposé à un endroit d'où un gaz de combustion peut être introduit dans la troisième structure de conduite (500) ;
des moyens d'introduction de gaz de combustion (550, 560) pour introduire un gaz de combustion, à partir du brûleur de préchauffage (530, 540), dans la troisième structure de conduite (500) ; et
un tuyau d'échappement (370), pour le dégagement du gaz de combustion, qui est disposé de manière à communiquer avec l'extrémité supérieure de la cuve de dégazage sous vide (320),
dans lequel un gaz de combustion qui provient du brûleur de préchauffage (530, 540) est introduit dans la troisième structure de conduite (500) dans un état où l'écoulement de verre fondu entre la cuve de fusion (100) et la cuvette amont (210) est arrêté par les premiers moyens de fermeture (220), afin de préchauffer le trajet d'écoulement du verre fondu dans le tuyau montant (330), la cuve de dégazage sous vide (320) et le tuyau descendant (340), et
dans lequel, une fois le préchauffage terminé, le verre fondu est autorisé à s'écouler grâce à l'ouverture des premiers moyens de fermeture (220), la pression à l'intérieur de la cuve de dégazage sous vide (320) est réduite pour faire monter le verre fondu à partir de la cuvette amont (210), par le tuyau montant (330), jusque dans la cuve de dégazage sous vide (320), le verre fondu est dégazé dans ladite cuve de dégazage sous vide (320), et le verre fondu dégazé est amené à descendre par le tuyau descendant (340) et à sortir de la cuvette aval (410), pour l'obtention de verre fondu.

10. Procédé de production de verre fondu selon la revendication 9, dans l'appareil de production de verre fondu comprend également des deuxièmes moyens de fermeture (510, 520) disposés sur la troisième structure de conduite (500), pour arrêter l'écoulement de verre fondu dans ladite troisième structure de conduite (500), et
dans lequel un gaz de combustion qui provient du brûleur de préchauffage (530, 540) est introduit dans la troisième structure de conduite (500) dans un état où l'écoulement de verre fondu entre ladite troisième structure de conduite (500) et la cuvette amont (210) est arrêté par les deuxièmes moyens de fermeture (510, 520), afin de préchauffer le trajet d'écoulement du verre fondu dans le tuyau montant (330), la cuve de dégazage sous vide (320) et le tuyau descendant (340).

11. Procédé de production de produits en verre, qui comprend une étape de préchauffage de la trajectoire d'écoulement par le procédé de production de verre fondu tel que défini dans la revendication 9 ou 10, une étape de production d'un verre en fusion après l'étape de préchauffage, une étape de formage du verre fondu pour obtenir un produit formé, et une étape de recuit pour recuire le produit formé, afin d'obtenir un produit en verre.
